# EUROPEAN PATENT APPLICATION

(11) **EP 1 555 814 A2**
(43) Date of publication of application: **20.07.2005**
(21) Application number: 05000394.6
(22) Date of filing: 11.01.2005
(51) Int. Cl.: H04N 5/44, H04N 7/01

(54) **Reducing burn-in associated with mismatched video image/display aspect ratios**

(30) Priority: 15.01.2004 US 757844
(71) Applicant: MATSUSHITA ELECTRIC INDUSTRIAL CO., LTD., Kadoma-shi, Osaka 571-8501 (JP)
(72) Inventor: Bowser, Todd S., Yardley, PA 19067 (US)
(74) Representative: Schwabe - Sandmair - Marx

(57) **Abstract**

A method, apparatus, and system for reducing burn-in associated with mismatched active image and video display aspect ratios is disclosed. Burn-in, which may occur from displaying a full widescreen image on a standard display or displaying a full standard image on a widescreen display, is reduced by shifting, over time, the position of the full images within the displays.

## Description

### FIELD OF THE INVENTION

The present invention relates to the field of video signal processing and, more particularly, to methods, apparatus, and systems for reducing burn-in associated with mismatched active image and video display aspect ratios such as widescreen video images displayed on standard video displays and standard video images displayed on widescreen video displays.

### BACKGROUND OF THE INVENTION

Television systems are presently available having standard video displays sized to display 4X3 aspect ratio video images (referred to hereinafter as "standard" images) and widescreen video displays sized to display video images that are wider then the standard 4X3 aspect ratio (referred to herein as "widescreen" images). Presently, both standard images and widescreen images are publicly available. For example, the television industry commonly broadcasts television signals having a standard aspect ratio and the motion picture industry commonly distributes motion pictures having an aspect ratio of 16X9 or greater.

When displaying a video image in its entirety on a video display having a different aspect ratio than the video image, the video image does not fill the entire video display. Typically, these images include inactive areas (e.g., black bars) surrounding the active video image. The active and inactive areas of the image subject the video display to different average intensity levels. Over time, this difference in intensity levels results in the video display having noticeable areas that appear different than other areas when displaying active images having the same aspect ratio as the video display, a condition known as burn-in. Many viewers are distracted by this condition, thus diminishing the viewing enjoyment these viewers experience when watching video images on these video displays.

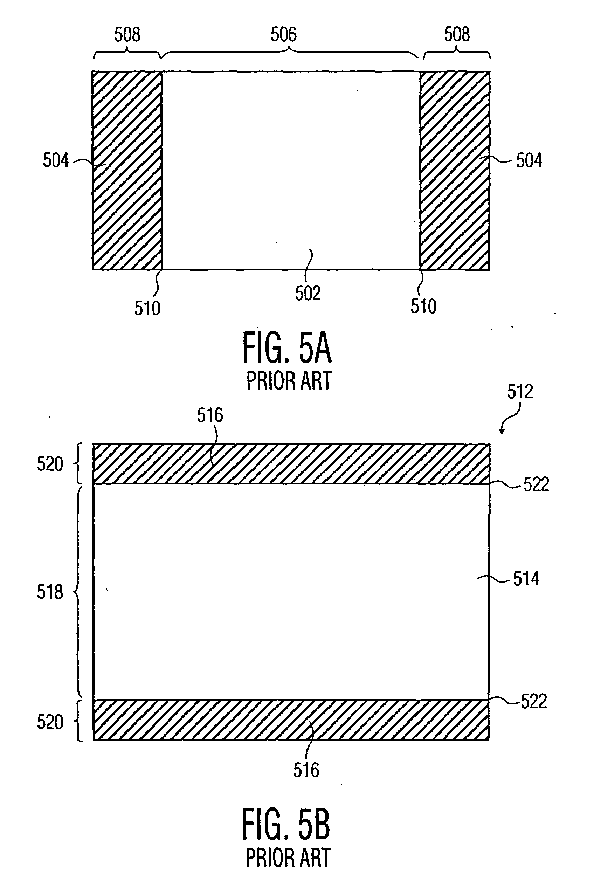

FIG. 5A depicts a widescreen video display 500 displaying a standard image having an active area 502 and inactive area 504 on the left and right sides of the standard active area 502. The standard-signal active area 502 is displayed in an active display area 506 and the inactive areas 504 are displayed in inactive display areas 508. Over time, burn-in occurs, which produces noticeable transition lines 510 between the active display area 506 and inactive display areas 508 on the widescreen video display 500.

FIG. 5B depicts a standard video display 512 displaying a widescreen image having an active area 514 and inactive areas 516 above and below the widescreen active area 514. The widescreen-signal active area 514 is displayed in an active display area 518 and the inactive areas 516 are displayed in inactive display areas 520. Over time, burn-in occurs, which produces noticeable transition lines 522 between the active display area 518 and inactive display areas 520 on the standard video display 512.

Presently, burn-in is avoided by eliminating the inactive areas or flooding the inactive areas with a color other than black. The inactive areas are eliminated by expanding the active image to fill the entire video display. Typically, the active image is expanded by stretching the active image in one dimension or the other (e.g., either horizontally or vertically) as needed to fill the entire video display or enlarging the active image in two dimensions (e.g., horizontally and vertically) as need to eliminate the inactive areas. If the active image is enlarged in both dimensions, it may be necessary to crop the enlarged active image to fit within the video display. Thus, by expanding the active image, the active image is either distorted or a portion of the active image is lost. When the inactive areas are flooded with colors other than black to avoid burn-in, the difference between the active and inactive area is less pronounced, however, over time, a noticeable transition still develops between the active and inactive areas.

Accordingly, methods, systems, and apparatus are needed for reducing the effect of burn-in that are not subject to the limitations of the prior art. The present invention fulfils this need among others.

### SUMMARY

The present invention provides a method, apparatus, and system for reducing the effect of burn-in associated with displaying an active image area on a video display having a different aspect ratio than the active image area. The effect of burn-in is reduced by determining an offset for the active image area with respect to the video display and adjusting the offset such that the active image area is periodically shifted within the video display. Shifting the active image area within the video display results in shifting transition lines between the active image area and inactive areas surrounding the active image area, which, in turn, prevents the formation of sharp transition lines between these areas. Accordingly, a video display can display an active image area having a different aspect ratio than the video display in its entirety without the formation of sharp transition lines, thus making changes to the display due to burn-in less visible.

The method, apparatus, and system in accordance with exemplary embodiments of the present invention provide for displaying the active image area of a video image on a display device having a different aspect ratio than the active image area.

An exemplary method includes determining an offset corresponding to a difference between a first side of the video display and a first side of the active image area and adjusting the offset over time such that the active image area is moved within the video display in at least a portion of an area defined by the first side and the second side of the video display. One or more of the steps may be implemented in software that controls the general purpose computer.

An exemplary system includes means for determining an offset corresponding to a difference between a first side of the video display and a first side of the active image area and adjusting the offset over time such that the active image area is moved within the video display in at least a portion of an area defined by the first side and the second side of the video display.

An exemplary apparatus includes an active video detector, a processor, and an offset device. The active video detector is configured to determine shift parameters corresponding to a difference between the first side of the video display and the first side of the active image area. The processor is configured to determine an offset based on the shift parameters and to adjust the offset. The offset device is coupled to the processor and is configured to process the active image area for display on the video display responsive to the adjusted offset such that, when displayed, the active image area is moved within the video display in at least a portion of an area defined by the first side and the second side of the video display. One or more of the functions of the various components may be implemented in software that controls a general or specific purpose computer.

### BRIEF DESCRIPTION OF THE DRAWINGS

The invention is best understood from the following detailed description when read in connection with the accompanying drawings, with like elements having the same reference numerals. This emphasizes that according to common practice, the various features of the drawings are not drawn to scale. On the contrary, the dimensions of the various features are arbitrarily expanded or reduced for clarity. Included in the drawings are the following features:

Figure 1 is a block diagram of a video apparatus in accordance with an exemplary embodiment of the present invention;

Figure 2 is a flow chart of exemplary steps performed by the active video detector of FIG. 1;

Figure 3A is a block diagram of an exemplary video processor for use in the video apparatus of FIG. 1;

Figure 3B is a block diagram of an alternative exemplary video processor for use in the video apparatus of FIG. 1;

Figure 4A is an illustration of a standard video image displayed in its entirety and centered on a widescreen video display in accordance with an exemplary embodiment of the present invention;

Figure 4B is an illustration of the standard video image of Figure 4A partially shifted to the right in accordance with an exemplary embodiment of the present invention;

Figure 4C is an illustration of the widescreen video image of Figure 4A fully shifted to the right in accordance with an exemplary embodiment of the present invention;

Figure 4D is an illustration of a widescreen image displayed in its entirety and centered on a standard video display in accordance with an exemplary embodiment of the present invention;

Figure 5A is an illustration of a standard video image displayed in its entirety on a widescreen video display in accordance with the prior art; and

Figure 5B is an illustration of a widescreen video image displayed in its entirety on a standard video display in accordance with the prior art.

### DETAILED DESCRIPTION OF THE INVENTION

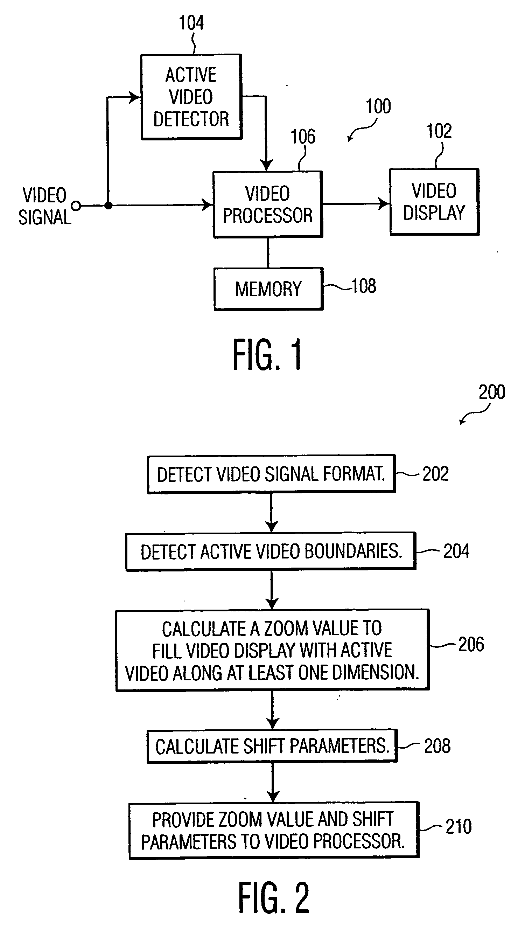

FIG. 1 depicts an exemplary video apparatus 100 for moving an active image of a video image within a video display 102 to reduce the effects of burn-in associated with displaying an active image on a video display having a different aspect ratio than the active image. The active image represents the area of the video image containing visible detail. For example, a standard video signal carrying a 16X9 widescreen active image for display in its entirety on a 4X3 standard video display includes inactive areas, e.g., black bars, above and below the widescreen active image. Likewise, a widescreen video signal carrying a 4X3 standard active image for display in its entirety on a 16X9 widescreen video display includes inactive areas to the left and the right of the standard active image. In addition, a standard (widescreen) video signal may include a widescreen (standard) active image with inactive images on the top/bottom (right/left) that will result in inactive areas on all sides of the active image when displayed on a widescreen (standard) video display. Thus, the total video image carried by the video signal for mismatched aspect ratios between the active image and the intended video display includes the active image and inactive images for display to the top/bottom and/or the left/right of the active image.

The video display 102 is a display device for displaying images. The display device 102 has a horizontal dimension and a vertical dimension. In an exemplary embodiment, the display device 102 has a standard aspect ratio, i.e., 4X3, or a widescreen aspect ratio, i.e., an aspect ratio greater than 4X3 such as 16X9. A 4X3 aspect ratio video display 102 has three (3) units of vertical height for every four (4) units of horizontal width and a 16X9 aspect ratio video display 102 has nine (9) units of vertical height for every 16 units of horizontal width. In an exemplary embodiment, the video display 102 may be, for example, a cathode ray tube (CRT), plasma, LCD, or projection video display.

A video signal is applied to the video apparatus 100. In an exemplary embodiment, the video signal is a composite video signal that carries a video image including active and inactive images intended for display on a display device 102.

In one exemplary embodiment, the video signal includes a standard active image area for display in the center of a widescreen video display and inactive areas for display to the left and the right of the standard active image. In accordance with this embodiment, the inactive area to the left of the standard active image effectively offsets the standard active image with respect to the left hand edge of the widescreen video display. In an alternative exemplary embodiment, the video signal includes a widescreen active image area for display in the center of a standard video display and inactive areas for display above and below the widescreen active image. In accordance with this embodiment, the inactive area for display on top of the widescreen active image effectively offsets the widescreen active image with respect to the top of the standard video display.

An active video detector 104 detects the format of the video signal and the boundary parameters of the active image within the video signal for use by the video processor in determining offsets. In addition, as described in further detail below, the active video detector 104 may determine a zoom value for enlarging the active image to fill an intended video display along at least one dimension, e.g., horizontally or vertically. Those of skill in the art will understand how to make a suitable active video detector 104 from the description herein.

FIG. 2 depicts a flow chart 200 of exemplary steps performed by the active video detector 104 (FIG. 1). At block 202, the active video detector detects the video format of the video signal. For example, the active video detector may detect if the video signal is a standard 4X3 aspect ratio video image signal or a widescreen 16 X 9 aspect ratio video image signal. The active video detector may determine the aspect ratio of the video image signal in a known manner from data encoded in the video signal.

At block 204, the active video detector detects boundaries of the active image within the video image signal. In an exemplary embodiment, the active video detector detects the boundaries of the active image in the video signal through a frame to frame comparison to find inactive areas in the video signal such as entire lines or columns that are within a predefined threshold from frame to frame. In an alternative exemplary embodiment, the active video detector 104 detects inactive areas by detecting black lines and/or columns having pixel values that are within a predetermined threshold level (e.g., 10 IRE) of black across the entire active video interval of the lines and/or columns. The active video detector then determines the boundaries of the active image by subtracting the detected inactive areas from the video signal. In this manner, the active video detector 104 is able to identify one or more parameters that define the boundaries of the active image. These parameters may include, by way of non-limiting example, the horizontal distance from an upper corner of the complete video image within the video signal to one or more corners of the active image and a vertical distance from the upper corner of the complete video image within the video signal to one or more corners of the active image. The parameters may be specified in pixels, lines, columns, or other such measurements. In an exemplary embodiment, potentially copyrightable material, such as borders containing text, surrounding the active image may be considered part of the active image. These areas may be determined by detecting their color (e.g., non-black) or color variations along the length of the lines and/or columns due to images and/or text within the area defined by the lines and/or columns.

At block 206, the active video detector calculates a zoom value that will result in the active image filling the video display 102 along at least one dimension when applied to the active image of the video signal. In an exemplary embodiment, the active video detector 104 is preprogrammed, e.g., by a user via a conventional user interface (not shown), with the aspect ratio of the video display or detects the aspect ratio from the video display itself, e.g., through a known digital visual interface (DVI). The active video detector 104 can then calculate a zoom parameter in a known manner from the aspect ratio of the intended video display and the boundary parameters determined at block 204. If inactive bars are added to the sides of a standard active image for transmission as a widescreen video image and the widescreen video image is intended for display on a standard video display, the intended standard video display may display inactive bars on the top and the bottom of the widescreen video image. Thus, the standard active image will be surrounded on all sides by inactive areas. In an exemplary embodiment, the active video detector calculates a zoom value to enlarge the active image such that the inactive areas are not visible on at least one axis when the active image is displayed on an intended display while retaining the entire active image along an axis orthogonal to that axis. For example, if the active image needs to be enlarged 20 percent to fill an intended video display in a vertical direction and needs to be enlarged 30 percent to fill an intended display in a horizontal direction, a zoom value that will result in a 20 percent enlargement is calculated such that the active image is not "cropped" in the vertical direction. In an alternative exemplary embodiment, the image is not enlarged and the exemplary step of block 206 can be eliminated.

At block 208, the active video detector calculates shift parameters for shifting the active image within an intended display device. The active video detector calculates shift parameters for shifting the active image within the intended video display based on the aspect ratio of the video display, the boundary parameters of the active image, and, if the active image is to be enlarged, the zoom value calculated at block 206. The shift parameters identify the position of the active image within the video signal and the amount by which the active image can be shifted such that the active image will not be "cropped" when it is fully shifted in one direction or another. For example, assume a widescreen active image in a standard video image signal for display on a standard video display. The widescreen active image will not need to be enlarged since the widescreen active image will fill the entire screen of the video display horizontally with horizontal inactive areas above and below the widescreen active image. In this case, the shift parameter may be the horizontal distance from the top left corner of the entire video signal to the top left corner of the active image. If the active image needed to be enlarged to fill the intended video display along a dimension, the calculations can be appropriately made in a manner that will be understood by those of skill in the art such that the active image can be fully shifted without "cropping."

At block 210, the shift parameters and, if present, the zoom value are provided to the video processor 106 (FIG. 1).

Referring back to FIG. 1, a video processor 106 determines an offset for the active image with respect to a point of reference of the intended display device and adjusts the offset to move the active image within the video display 102. In an exemplary embodiment, the video processor 106 receives shift parameters and, optionally, a zoom value from the active video detector 104. The shift parameters represent a current offset of the active image for centering the active image on the intended video display and the maximum amount the offset can be adjusted to shift the active image on the intended video display without "cropping" a portion of the active image. The zoom value represents how much the video processor 106 should enlarge the active image in order for the active image to fill the video display entirely along one dimension, e.g., horizontally or vertically. The processor may include a universal format converter (UFC) for enlarging the active image and offsetting the active image. A known UFC 304 that is readily modifiable by those of skill in the art for use in the present invention is described in United States Patent 5,587,742 to Hau et al. entitled "Flexible Parallel Processing Architecture for Video Resizing," having the same assignee as the present invention.

In a digital system, the point of reference may be an address location of a physical edge of the video display 102 or a memory buffer corresponding to a respective edge of a video display. In an analog system, the point of reference may be a synchronization signal such as a horizontal synchronization signal that corresponds to the left edge of a video display or a vertical synchronization signal that corresponds to the top edge of a video display. For systems having a horizontal and/or vertical overscan, the processor 106 compensates accordingly.

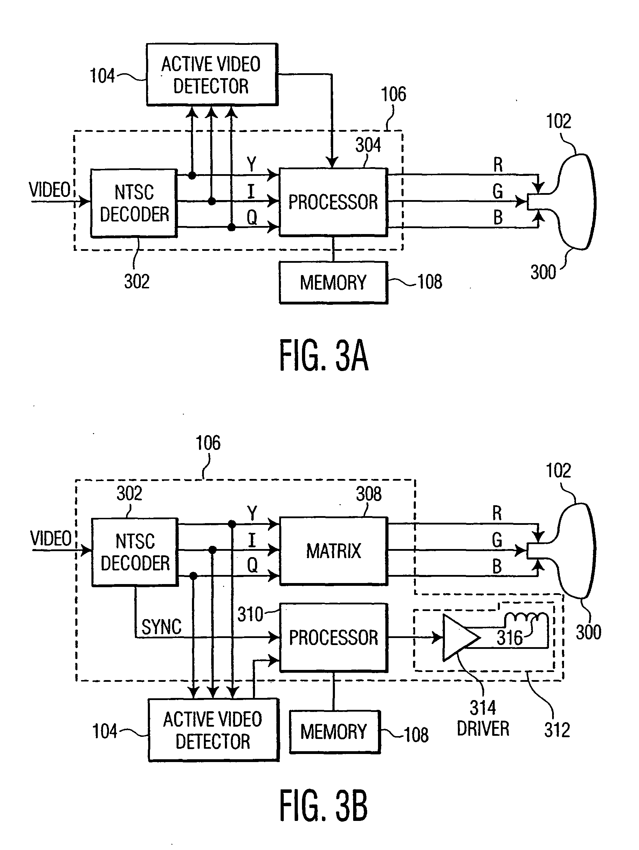

After determining the offset, the processor 106 adjusts the determined offset to move the active image within the video display to change, over time, the location of transition lines between the active image and the inactive images displayed on the video display 102. Generally, in an exemplary embodiment, the processor 106 adjusts the offset such that the active image moves throughout the video display up to a maximum offset without losing lines or columns of the active image. Specific embodiments for offsetting the active image to shift the active image within the video display 102 are described below with reference to FIGs. 3A and 3B.

In an exemplary embodiment, the processor 106 adjusts the offset such that the active image moves in a predefined or pseudo-random manner within the video display 102 so that the entire video display 102 is utilized for displaying the active image. In one exemplary embodiment, the processor adjusts the offset such that the active image is displayed in a plurality of different relative areas within the video display 102. For example, three different relative areas may be used, e.g., centered, full shift to one side, and full shift to another side opposite the first side. One of the three different relative areas may then be sequentially selected each time the display apparatus 100 is powered on or at predefined time intervals, e.g., every 20 minutes.

In an alternative exemplary embodiment, the active image is slowly moved in a substantially continuous manner from side to side. In one exemplary embodiment, the processor 106 adjusts the offset to shift an active image centered within the video display 102 to one side of the video display (e.g., top or left), to the other side of the video display (e.g., bottom or right), back to the center of the video display, and repeats this motion while displaying the active image. In certain exemplary embodiments, when the active image is moving toward a side of the video display 102, the active image moves toward that side until it reaches the edge of the video display 102; when the active image is moving toward the other side of the video display 102 the active image moves toward that side of the video display until it reaches that side of the video display 102, and when the active image reaches one of the edges of the video display 102, the active image moves toward the other edge of the video display 102. In certain other exemplary embodiment, the active image is moved between at least a portion of an area defined by a first side of the video display and a second side of the video display.

A memory 108 stores information for the video processor 106. In an exemplary embodiment, the memory 108 stores the last adjusted offset of the active image within the video display 102. In accordance with this embodiment, each time the video apparatus 100 is powered off the video processor 106 stores the current offset in the memory 108. When the video apparatus 100 is powered back on, the video processor 106 retrieves the stored offset from the memory 108 and causes the video display 102 to display the active image in substantially the same location as when the video apparatus 100 was powered off. Thus, if the video apparatus 100 is powered off during a cycle, when the video apparatus 100 is powered back on, the cycle is reentered where it left off. Accordingly, the completion of a cycle can be achieved during several periods when the video apparatus 100 is on.

FIG. 3A depicts an exemplary embodiment of the video processor 106 for displaying an active image on a video display 102 such as a cathode ray tube (CRT) 300. The image processor 106 illustrated in FIG. 3A includes a National Television System Committee (NTSC) decoder 302 and a processor 304. The NTSC decoder 302 separates the video signal into its luminance and chrominance components, e.g. luminance (Y), in-phase chrominance (I), and quadrature-phase chrominance (Q). A suitable NTSC decoder for use in the present invention will be readily apparent to those skilled in the art of video signal processing.

The active video detector 104 and the illustrated processor 304 receive the luminance and chrominance components from the NTSC decoder 302. The processor 304 determines an offset for the active image based on boundary parameters calculated by the active video detector 104. The determined offset corresponds to a difference between a first side of the active image and a corresponding side of the video display. The processor 304 then adjusts the offset to move the active image within the video display 102. Optionally, the processor 304 may enlarge the active image for display on the intended video display 102.

In addition, the processor 204 converts the luminance and chrominance components into signals that the video display is able to display, such as red (R), green (G), blue (B) component signals. The video display 102 receives the RGB component signals and produces the active image within the video display 102 as offset and, optionally, enlarged by the processor 204.

FIG. 3B depicts an alternative exemplary embodiment of the image processor 106 for displaying an active image on a video display 102 such as CRT 300. The video processor 108 illustrated in FIG. 3B includes an NTSC decoder 302, a matrix 308, a processor 310, and a deflection apparatus 312. The NTSC decoder 302 separates the composite video signal into its luminance and chrominance components, e.g. luminance (Y), in-phase chrominance (I), and quadrature-phase chrominance (Q). The matrix 308 converts the luminance and chrominance components produced by the NTSC decoder 302 to red (R), green (G), blue (B) component signals for display by a video display 102.

The processor 310 controls the deflection apparatus 312, which acts as an offset device, to modify the signals applied to the deflection yoke of the CRT 300 based on boundary parameters and, optionally, a zoom parameter from the active video decoder 104. The processor determines a delay period (i.e., the offset for an analog system) with respect to an appropriate synchronization signal corresponding to a respective side of the CRT 300. The deflection apparatus 312 adjusts the delay period by modify a signal applied to the deflection yoke such that the active image is moved within the video display 102 when the RGB component signals from the matrix 306 are displayed on the CRT 300. The illustrated processor 310 receives the video signal from the NTSC decoder 302.

The illustrated deflection apparatus 312 includes a deflection driver 314 and a deflection coil assembly 316. To move the active image within the video display 102, the processor 310 generates a deflection signal for controlling the deflection driver 314, which, in turn, controls the deflection coil assembly 316. The deflection driver 314 energizes the deflection coil assembly 316 based on the deflection signal to modify the deflection of the CRT 300. The results produced by this alternative embodiment are similar to those produced by the embodiment described above with reference to FIG. 3A with the deflection apparatus 312 offsetting the active image with respect to an edge of the video display 102.

In an exemplary embodiment, to shift a standard image intended for display on a widescreen video display, assume an "ideal" horizontal scanning signal represented as a saw tooth wave. For each tooth within the saw tooth wave, the rising portion represents a horizontal trace across the video display 102 and the falling portion represents a horizontal retrace that positions the raster for the next trace. The voltage level of the horizontal scanning signal, thus, represents the position of the raster on the video display. If the horizontal scanning signal voltage ranges from 0 to 1 volt and the video display is configured such that 0 volts corresponds to the left side of the video display and 1 volt corresponds to the right side of the video display, the active image will be displayed in a central position within the video display. To adjust the position of the active image, an offset voltage may be added to the horizontal scanning signal. For example, to shift the active image to the left, an offset voltage such as -0.2 volts may be added to the horizontal scanning signal so that the raster traces between a position to the left of the left side of the CRT 300 and a position to the left of the right side of the CRT 300, thereby shifting the active image to the left. Likewise, to shift the active image to the right, an offset voltage such as 0.2 volts may be added to the horizontal scanning signal so that the raster traces between a position to the right of the left side of the CRT 300 and a position to the right of the right side of the CRT 300, thereby shifting the active image to the right. Thus, the position of the video image (and equivalently the active image) within the CRT 300 is shifted to the left or the right by lowering or raising the offset voltage, respectively, which effectively delays the position of the active image with respect to a synchronization signal. In an exemplary embodiment, shifting a video image (and equivalently an active image) up and down within a CRT 300 is accomplished in a similar manner using a vertical scanning signal.

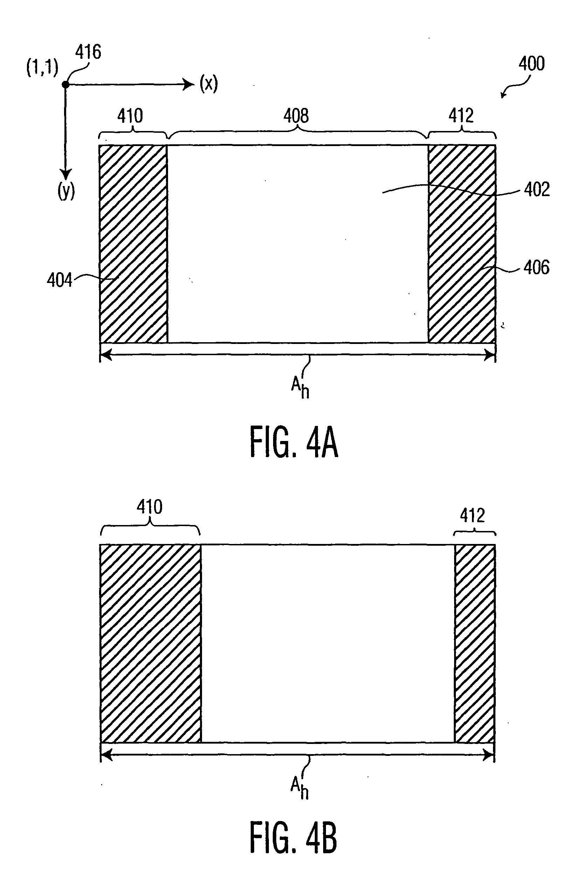

Exemplary uses of the present invention described above with reference to FIGs. 1, 3A, and 3B are now described with reference to FIGs. 4A through 4D.

FIG. 4A depicts a widescreen video display 400 displaying a standard active image area 402, a left inactive area 404, and a right inactive area 406. The standard active image area 402 is displayed in an active display area 408, the left inactive area 404 is displayed in a left inactive display area 410, and the right inactive area 406 is displayed in a right inactive display area 412. To prevent burn-in, the standard active image area 402 is shifted within the widescreen video display 400.

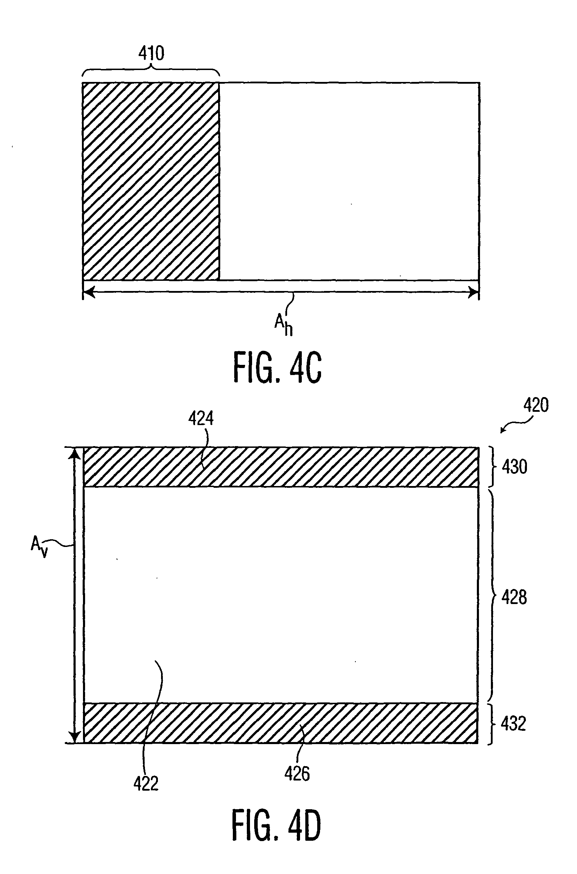

In an exemplary embodiment, the standard active image 402 is shifted to the right and to the left within the widescreen video display 400 along a horizontal axis, Ah. When the standard active image 402 is shifted to the left within the widescreen video display 400, the left inactive display area 410 is reduced and the right inactive display area 412 is increased. Likewise, when the standard active image 402 is shifted to the right within the widescreen video display 400, the left inactive display area 410 is increased and the right inactive display area 412 is decreased as illustrated in FIG. 4B. In certain exemplary embodiments, when the standard active image 402 is fully shifted to the right (left), the right (left) inactive display area 412 (410) is not present and the area of the right (left) inactive display area 412 (410) is maximized as illustrated in FIG. 4C.

In accordance with one exemplary embodiment, assume a conventional widescreen video display 400, e.g., a 16:9 aspect ratio video display that conforms to SMPTE274M (a high-definition television standard that is well known to those of skill in the art of television electronics). In accordance with this embodiment, the video display 400 has 1,080 active horizontal lines with 1,920 samples per line. If a sample is denoted as a square pixel, the position of each sample can be defined as an offset along a horizontal (x) axis and along a vertical (y) axis of a Cartesian coordinate system 414 with respect to an origin 416 (see FIG. 4A). The full-scale dimensions for the display 400 in this coordinate system 414 are 1y to 1080y along the vertical (y) axis and 1x to 1920x along the horizontal (x) axis. For descriptive purposes, it is assumed that all active lines and pixels on each line are visible and that the origin of the display device 400 is located at the upper left-hand corner of the widescreen video display 400.

In accordance with this one exemplary embodiment, a standard active image 402, when mapped to the center of the widescreen video display 400, occupies an effective area defined in a vertical direction from 1y to 1080y and in a horizontal direction from approximately 239x to 1680x. If a cycle is defined as the movement of the standard active image 402 from its starting position in the center of the widescreen video display 400 to the extreme left (or right), to the extreme right (or left), and returning to the starting position, and the standard active image 402 is shifted at a rate of one pixel column per every period of time, At, then the amount of active time for the pixels in each column x is shown in Table 1 below:

**TABLE 1 - Active Time**

| Columns | Description | Active Time |
|---|---|---|
| X = 1 to 480 | Left Side Pixels | (2x-1)*(Δt) |
| X = 481 to 1440 | Center Pixels | (always active) |
| X = 1441 to 1920 | Right Side Pixels | (2[1920-x]-1)(1/Δt) |

In an exemplary embodiment, Δt is selected such that the human eye is unable to detect the motion of the image 402, e.g., slower than approximately 2 pixel columns per minute. In this scenario, for a Δt of one pixel column per minute, one complete cycle is completed every 15 hours and 59 minutes of viewing (Δt*(2*480-1)), the left and right side columns of pixels, e.g., columns 1x and 1920x, are active for 1 minute out of every 15 hours and 59 minutes, and the center area, e.g., columns 481x to 1440x, is active at all times. The amount of active time per column of pixels gradually decreases from the center area, which is always on, to the outer edges. In this example, the decrease is linear. Accordingly, this scenario results in a gradual burn-in such that burn-in is more pronounced at the center of the video display, and gradually decreases toward the edges of the video display with no sudden or distinct transitions, thus reducing the effect of burn-in.

FIG. 4D depicts a standard video display 420 displaying a widescreen active image area 422, a top inactive area 424, and a bottom inactive area 426. The widescreen active image area 422 is displayed in an active display area 428, the top inactive area 424 is displayed in a top inactive display area 430, and the bottom inactive area 426 is displayed in a bottom inactive display area 432. To prevent burn-in, the widescreen active image area 422 is shifted within the standard video display 420.

In an exemplary embodiment, the widescreen active image 422 is shifted to the top and to the bottom within the standard video display 420 along a vertical axis, Av. When the widescreen active image 422 is shifted to the top within the standard video display 420, the top inactive display area 430 is reduced and the bottom inactive display area 432 is increased. Likewise, when the widescreen active image 422 is shifted to the bottom within the standard video display 420, the top inactive display area 430 is increased and the bottom inactive display area 432 is decreased. In certain exemplary embodiments, when the widescreen active image 422 is fully shifted to the top (bottom), the top (bottom) inactive display area 430 (432) is not present and the area of the bottom (top) inactive display area 432 (430) is maximized. Specific exemplary embodiments for shifting the widescreen video image 414 within the standard video display 412 will be readily apparent to those skilled in the art from the above description with reference to FIGs. 4A - 4C for shifting a standard video image 402 within a widescreen video display 400.

Although the invention has been described in terms of a active video detector 104 and a video processor 106, it is contemplated that the invention may be implemented in software on a general purpose computer (not shown). In this embodiment, one or more of the functions of the various components may be implemented in software that controls the general purpose computer. This software may be embodied in a computer readable carrier, for example, a magnetic or optical disk, a memory-card or an audio frequency, radio-frequency, or optical carrier wave.

While a particular embodiment of the present invention has been shown and described in detail, adaptations and modifications will be apparent to one skilled in the art. For example, although the present invention has been described in terms of shifting a widescreen image within a standard video display and shifting a standard image within a widescreen video display, the present invention may be used to shift a widescreen image within a widescreen video display having a different aspect ratio than the widescreen image. In addition, although various embodiments are described herein in terms of NTSC, it will be understood by those of skill in the art that the present invention may be applied to Phase Alternation Lines (PAL), Système Électronique pour Couleur avec Mémoire (SECAM), Advanced Television System Committee (ATSC), satellite or terrestrial transmissions, or essentially any means for communicating video signals. Such adaptations and modifications of the invention may be made without departing from the scope thereof, as set forth in the following claims.

## Claims

1. A method for displaying a video image from an image signal on a video display having a first side and a second side opposite the first side, the video image including an active image area having a first side and a second side opposite the first side, the active image area having a different aspect ratio than the video display, the method comprising the steps of:
determining an offset corresponding to a difference between the first side of the video display and the first side of the active image area; and
adjusting the offset such that the active image is moved within the video display in at least a portion of an area defined by the first side and the second side of the video display.

2. The method of claim 1, further comprising the step of:
calculating shift parameters for the active image with respect to the video display;
calculating a zoom value for enlarging the active image;
wherein the determining step comprises determining the offset based on the shift parameters and the zoom value.

3. The method of claim 1, wherein the image signal has a synchronization signal corresponding to the first side of the video display when the image signal is presented by the video display and wherein:
the determining step comprises determining a delay period between the synchronization signal and the first side of the active image area; and
the adjusting step comprises adjusting the delay period.

4. The method of claim 1, wherein the offset is adjusted such that the active image area is displayed in a plurality of different relative areas within the video display.

5. The method of claim 1, wherein the offset is adjusted such that when the active image area is moving toward the first side of the video display the active image area is moved toward the first side of the video display until the first side of the active image area corresponds to the first side of the video display, when the active image area is moving toward the second side of the video display the active image area is moved toward the second side of the video display until the second side of the active image area corresponds to the second side of the video display, and when the active image area reaches one of the first and second sides of the video display the active image area is moved toward the second and first sides of the video display, respectively.

6. The method of claim 1, wherein the offset is adjusted at a predefined rate, the predefined rate selected such that a human eye does not detect the movement of the active image area.

7. The method of claim 1, wherein the video display includes a plurality of pixel rows parallel to the first side of the video display, the delay period is adjusted at a predefined rate, and the predefined rate is less than two pixel rows per minute.

8. The method of claim 1, wherein the active image area is written to a memory buffer representing the video display prior to display on the video display and wherein the adjusting step comprises:
adjusting the position within the memory buffer where the active image area is written to move the position of the active image within the video display.

9. The method of claim 1, wherein the video display has a deflection coil apparatus that deflects a raster to produce the active image area on the video display, wherein the adjusting step comprises:
adjusting signals applied to the deflection coil apparatus to deflect the raster such that the position of the active image is moved within the video display.

10. A system for displaying a video image from an image signal on a video display having a first side and a second side opposite the first side, the video image including an active image area having a first side and a second side opposite the first side, the active image area having a different aspect ratio than the video display, the system comprising:
means for determining an offset corresponding to a difference between the first side of the video display and the first side of the active image area; and
means for adjusting the offset such that the active image area is moved within the video display in at least a portion of an area defined by the first side and the second side of the video display.

11. The system of claim 10, further comprising:
means for calculating shift parameters for the active image with respect to the video display
means for determining a zoom value for enlarging the active image;
wherein the means for determining the offset determines the offset based on the shift parameters and the zoom value.

12. The system of claim 10, further comprising:
means for storing a last position indicator corresponding to the last adjusted offset,
wherein, at startup, the offset is set to the last adjusted offset.

13. The system of claim 10, wherein the active image area is written to a memory buffer representing the video display prior to display on the video display and wherein the adjusting means comprises:
means for adjusting the position within the memory buffer where the active image area is written to move the position of the active image area within the video display.

14. The system of claim 10, wherein the video display has a deflection coil apparatus that deflects a raster to produce the active image area on the video display, wherein the adjusting means comprises:
means for adjusting signals applied to the deflection coil apparatus to deflect the raster such that the position of the active image area is moved within the video display.

15. An apparatus for displaying a video image from an image signal on a video display having a first side and a second side opposite the first side, the video image including an active image area having a first side and a second side opposite the first side, the active image area having a different aspect ratio than the video display, the apparatus comprising:
an active video detector configured to determine shift parameters corresponding to a difference between the first side of the video display and the first side of the active image area.
a processor configured to determine an offset based on the shift parameters and to adjust the offset; and
an offset device coupled to the processor, the offset device configured to process the active image area for display on the video display responsive to the adjusted offset such that, when displayed, the active image area is moved within the video display in at least a portion of an area defined by the first side and the second side of the video display.

16. The apparatus of claim 15, wherein the active video detector is further configured to determine a zoom value for enlarging the active image; and
wherein the shift parameters are based on the zoom value.

17. The apparatus of claim 15, wherein the processor determines a delay period corresponding to the offset responsive to a difference between a synchronization signal corresponding to the first side of the video display and the first side of the active image area and adjusts the delay period synchronization signal to move the active image within the video display.

18. The apparatus of claim 15, further comprising:
a memory for storing a last position indicator corresponding to the last adjusted offset, wherein, at startup, the processor adjusts the offset to the last adjusted offset responsive to the last position indicator.

19. The apparatus of claim 15, wherein the offset device includes a memory having a buffer area corresponding to the video display and wherein the processor adjusts the offset by adjusting the position within the buffer area where the active image area is written, thereby moving the active image area within the video display.

20. The apparatus of claim 15, wherein the offset device is a deflection coil apparatus coupled to the video display to deflect a raster to produce the active image area on the video display and wherein the processor adjusts the offset by modifying signals applied to the deflection of the raster, thereby moving the position of the active image area within the video display.

21. A computer readable medium including software that is configured to control a general purpose computer to implement a method for displaying a video image from an image signal on a video display having a first side and a second side opposite the first side, the video image including an active image area having a first side and a second side opposite the first side, the active image area having a different aspect ratio than the video display, the method including the steps of:
determining an offset corresponding to a difference between the first side of the video display and the first side of the active image area; and
adjusting the offset such that the active image is moved within the video display in at least a portion of an area defined by the first side and the second side of the video display.

22. The computer readable medium of claim 21, wherein the method implemented by the general purpose computer further includes the steps of:
calculating shift parameters for the active image with respect to the video display;
calculating a zoom value for enlarging the active image;
wherein the determining step comprises determining the offset based on the shift parameters and the zoom value.

23. The computer readable medium of claim 21, wherein the active image area is written to a memory buffer representing the video display prior to display on the video display and wherein the adjusting step for implementation by the general purpose computer includes the step of:
adjusting the position within the memory buffer where the active image area is written to move the position of the active image within the video display.
